# EUROPÄISCHE PATENTSCHRIFT

(11) **EP 1 060 579 B1**
(45) Veröffentlichungstag und Bekanntmachung des Hinweises auf die Patenterteilung: **03.09.2003**
(21) Anmeldenummer: 99914420.7
(22) Anmeldetag: 16.02.1999
(51) Int. Cl.: H04B 7/26

(54) **VERFAHREN UND FUNK-KOMMUNIKATIONSSYSTEM ZUR INFORMATIONSÜBERTRAGUNG**
METHOD AND RADIO COMMUNICATION SYSTEM FOR DATA TRANSMISSION
PROCEDE ET SYSTEME DE RADIOTELECOMMUNICATION POUR TRANSMETTRE DES DONNEES

(30) Priorität: 03.03.1998 DE 19808948
(43) Veröffentlichungstag der Anmeldung: 20.12.2000
(73) Patentinhaber: SIEMENS AKTIENGESELLSCHAFT, 80333 München (DE)
(72) Erfinder: SCHINDLER, Jürgen, D-81369 München (DE)
(86) Internationale Anmeldenummer: DE9900422
(87) Internationale Veröffentlichungsnummer: WO99045661

(56) Entgegenhaltungen:
- EP-A- 0 720 321
- US-A- 5 020 056
- US-A- 5 493 563

## Beschreibung

Die Erfindung betrifft ein Verfahren und ein Funk-Kommunikationssystem zur Informationsübertragung, insbesondere für Funk-Kommunikationssysteme, bei denen Information durch Funkblöcke entsprechend einem Zeitraster übertragen werden.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunknetze mit CDMAoder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen. Zur Unterscheidung unterschiedlicher Signalquellen beim Empfänger sind als Frequenzmultiplex (FDMA), Zeitlagenmultiplex (TDMA) und/oder ein als Codemultiplex (CDMA) bekannte Verfahren einsetzbar.

Eine besondere Ausprägung des Zeitlagenmultiplex (TDMA) ist ein TDD (time division duplex) Übertragungsverfahren, bei dem in einem gemeinsamen Frequenzkanal die Übertragung sowohl in Aufwärtsrichtung, d.h. von der Mobilstation zur Basisstation, als auch in Abwärtsrichtung, d.h. von der Basisstation zur Mobilstation, erfolgt.

Aus DE 197 13 667 ist es bekannt, in einem Zeitschlitz sowohl Nutzinformationen als auch Organisationsinformationen zu übertragen. Einer Mobilstation, der ein solcher Zeitschlitz für die Nutzinformation zugewiesen wurde, kann gleichzeitig die Organisationsinformationen der gleichen Funkzelle auswerten. Für eine Auswertung der Organisationsinformationen benachbarter Zellen, die üblicherweise in einem festgelegten Zeitschlitz gesendet werden, ist die Mobilstation damit nicht frei. Eine Alternative ist aus dem GSM-Mobilfunknetz bekannt. Hierbei ist ein eigener Zeitschlitz nur für die Organisationsinformationen reserviert, so daß sich eine Mobilstation von Rahmen zu Rahmen entscheiden kann, von welcher Basisstation sie die Organisationsinformationen empfängt. Die Nutzinformationen werden in weiteren Zeitschlitzen übertragen, die sich nicht ändern. In beiden Fällen ändert sich die Position der Informationsübertragung innerhalb des Zeitrasters nicht.

In der US 5,020,056 A ist ein Mobilfunksystem beschrieben, bei dem zur Reduzierung von synchronem Fading ein Wechsel von Zeitschlitzen für die einzelnen Verbindungen vorgenommen wird. Auf diese Weise wird für jede Verbindung der Abstand zwischen den übertragenen Funkblöcken von Rahmen zu Rahmen gemäß einer bestimmten Sequenz verändert.

In der EP 0 720 321 A ist ein Mobilfunksystem beschrieben, das nach einem TDD-Verfahren arbeitet.

In der US 5,493,563 A ist ein Mobilfunksystem beschrieben, das nach einem TDMA-Verfahren arbeitet. Zur Unterstützung einer Verbindungsübergabe wird ein Frequenzsprungverfahren eingesetzt.

Der Erfindung liegt die Aufgabe zugrunde, ein verbessertes Verfahren und verbesserte Funk-Kommunikationssysteme zur Informationsübertragung anzugeben, bei denen Störeinflüssen auf eine Verbindung in einer Funkzelle vermieden werden, die durch Verbindungen in einer benachbarten Funkzelle hervorgerufen werden. Diese Aufgabe wird durch das Verfahren gemäß Anspruch 1 und das Funk-Kommunikationssystem gemäß Anspruch 11 gelöst.

Dabei werden beim Verfahren zur Informationsübertragung zwischen einer Basisstation und weiteren Funkstationen in einem Funk-Kommunikationssystem die Informationen durch Funkblöcke entsprechend einem Zeitraster übertragen. Für eine Verbindung wird jedoch der Abstand zwischen den übertragenen Funkblöcken einer Übertragungsrichtung gemäß einer vorgebbaren Sequenz verändert. Damit ist für die empfangende Station nicht ständig zu einem wiederkehrenden Zeitpunkt innerhalb des Zeitrasters der Empfang von evtl. nur zu diesem Zeitpunkt verfügbaren Informationen oder Meßsequenzen durch die innerhalb der Verbindung zu übertragenden Informationen blockiert.

Ein weiterer Vorteil besteht darin, daß einer bessere Mittelung der Interferenzen bewirkt wird. Damit verbessert sich zusätzlich die Übertragungsqualität.

Zur Lösung der oben genannten Aufgabe unterscheiden sich die Sequenzen von Funkzelle zu Funkzelle. Damit treffen Störungen, die in bestimmten Zeitschlitzen durch Mobil- oder Basistationen in Nachbarzellen verursacht werden, nicht ständig auf die gleichen Verbindungen und es tritt eine Mittelung der Störungen über eine größere Anzahl von Verbindungen auf.

Nach einer Weiterbildung der Erfindung erfolgt die Informationsübertragung in Ab- und Aufwärtsrichtung in einem gemeinsamen Frequenzkanal, wobei zwischen Abwärtsrichtung und Aufwärtsrichtung zumindest ein Umschaltzeitpunkt innerhalb eines Rahmens festgelegt ist. Bei solchen TDD-Übertragungssytemen sind die zeitlichen Einschränkungen für Mobilstation größer, da innerhalb eines Rahmens nur zeitweilig der Empfang möglich ist. Hier wirkt das erfindungsgemäße Verfahren besonders vorteilhaft.

Nach einer vorteilhaften Weiterbildung der Erfindung wird die vorgebbaren Sequenz mittels Signalisierungsinformationen zwischen den beteiligten Stationen eingestellt. Sie wird folglich aus den konkreten Gegebenheiten der Funkzelle optimal abgeleitet. In Auf- und Abwärtsrichtung können vorteilhafterweise unterschiedliche Sequenzen verwendet werden. Aus den genannten Gründen ist es vor allem in Abwärtsrichtung wichtig, mittels "slot rotation" die Nachbarzellenmessung zu unterstützen. Es geht dabei vor allem um die Verbindungen in den Zeitschlitzen mit den Organisationsinformationen. In Aufwärtsrichtung kann auf eine solche zyklische Verschiebung der Sendezeitpunkte einer Verbindung verzichtet werden.

Es ist besonders vorteilhaft, daß der Umschaltzeitpunkt innerhalb eines Rahmens mit mehreren Funkblöcken für beide Übertragungsrichtungen einstellbar ist. Damit wird eine asymmetrische Verteilung der Datenrate in Auf- und Abwärtsrichtung entsprechend dem momentanen Bedarf ermöglicht. Für Datenübertragungsdienste, z.B. mobile WWW-Browser, wird oft in Abwärtsrichtung eine größere Informationsmenge zu übertragen sein als in Aufwärtsrichtung. Dies kann bei guter spektraler Effizienz durch das Verschieben des Umschaltzeitpunktes zugunsten der Abwärtsrichtung erreicht werden. Wird zu einem späteren Zeitpunkt, z.B. durch eine Sprachübertragung oder durch hohe in Aufwärtsrichtung zu übertragene Daten, die eine symmetrische Ressourcenverteilung bzw. ein die Aufwärtsrichtung begünstigende Ressourcenverteilung benötigen, wiederum eine vergrößerte Datenrate in Aufwärtsrichtung benötigt, kann der Umschaltzeitpunkt dem angepaßt werden.

Das erfindungsgemäße Verfahren ist besonders vorteilhaft für TDD-Systeme anwendbar, bei denen die Frequenzkanäle breitbandig sind und in einem Frequenzkanal gleichzeitig mehrere durch CDMA-Kodes unterscheidbare Signale übertragen werden. Bei breitbandigen Zeitschlitzen ist es besonders wichtig, einen Zeitschlitz mit Organisations- und Nutzinformation optimal auszunutzen.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobilfunknetzes,
- FIG 2: eine schematische Darstellung der Rahmenstruktur des TDD-Übertragungsverfahrens,
- FIG 3: die Verteilung der Verbindungen auf die Zeitschlitze,
- FIG 4: Blockschaltbilder von Basisstation und Mobilstation,
- FIG 5: ein Ablaufdiagramm für die Informationsübertragung.

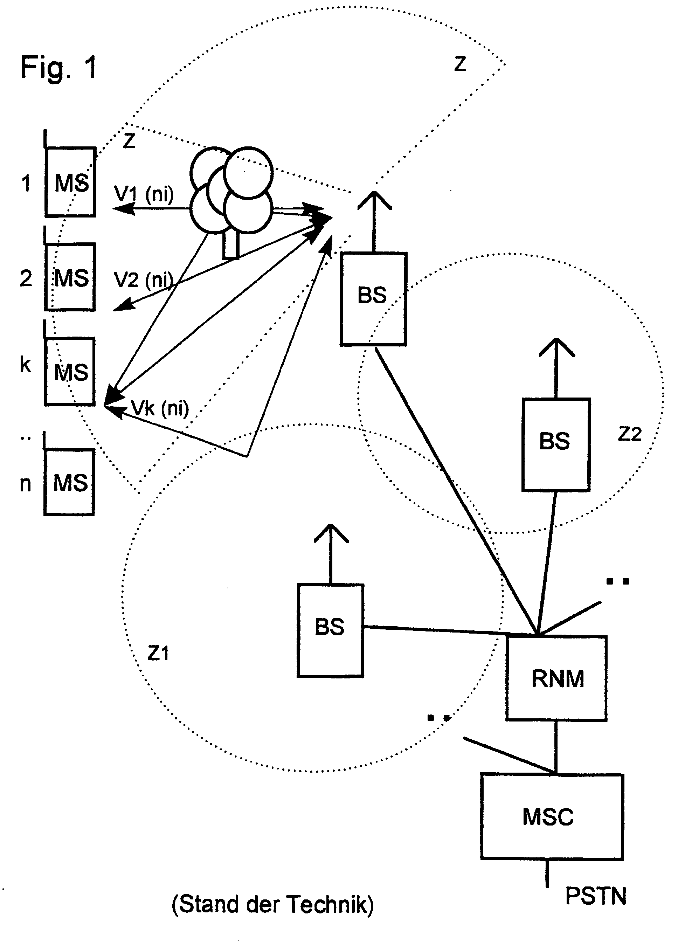

Das in FIG 1 dargestellte Funk-Kommunikationssystem besteht aus einer Vielzahl von Mobilvermittlungsstellen MSC die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z, Z1, Z2 gebildet. Bei einer Sektorisierung oder bei hierarchischen Zellstrukturen werden pro Basisstation BS auch mehrere Funkzellen Z versorgt.

In FIG 1 sind beispielhaft Verbindungen V1, V2, Vk zur Übertragung von Nutzinformationen ni und Signalisierungsinformationen si zwischen Mobilstationen MS1, MS2, MSk, MSn und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf Teilnehmerzugangsnetze mit drahtlosem Teilnehmeranschluß übertragbar.

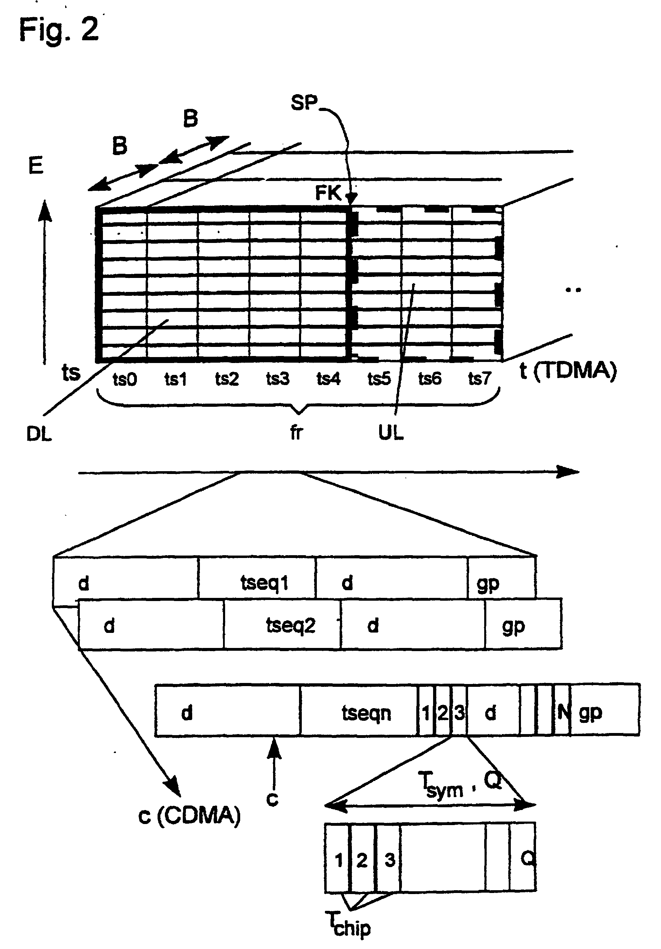

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 1,2 MHz in mehrere Zeitschlitze ts gleicher Zeitdauer, beispielsweise 8 Zeitschlitze ts0 bis ts7 vorgesehen. Der Frequenzbereich B bildet einen Frequenzkanal FK. Ein Teil der Zeitschlitze ts0 bis ts4 werden in Abwärtsrichtung DL und ein Teil der Zeitschlitze ts5 bis ts7 werden in Aufwärtsrichtung UL benutzt. Dazwischen liegt ein Umschaltzeitpunkt SP. Die Übertragung in Abwärtsrichtung DL erfolgt beispielsweise vor der Übertragung in Aufwärtsrichtung UL. Bei diesem TDD-Übertragungsverfahren entspricht der Frequenzkanal FK für die Aufwärtsrichtung UL dem Frequenzkanal FK für die Abwärtsrichtung DL. Gleiches wiederholt sich für weitere Trägerfrequenzen.

Innerhalb der Frequenzkanäle FK, die zur Informationsübertragung vorgesehen sind, werden Informationen mehrerer Verbindungen in Funkblöcken übertragen. Diese Funkblöcke zur Nutzdatenübertragung bestehen aus Abschnitten mit Daten d, in denen Abschnitte mit empfangsseitig bekannten Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen fr zusammengefaßt, wobei beispielsweise ein Zeitschlitz wiederkehrend von einer Gruppe von Verbindungen genutzt wird. Es können jedoch auch Rahmen mit mehr als acht Zeitschlitzen, z.B. 16 oder 32 Zeitschlitzen, gebildet werden.

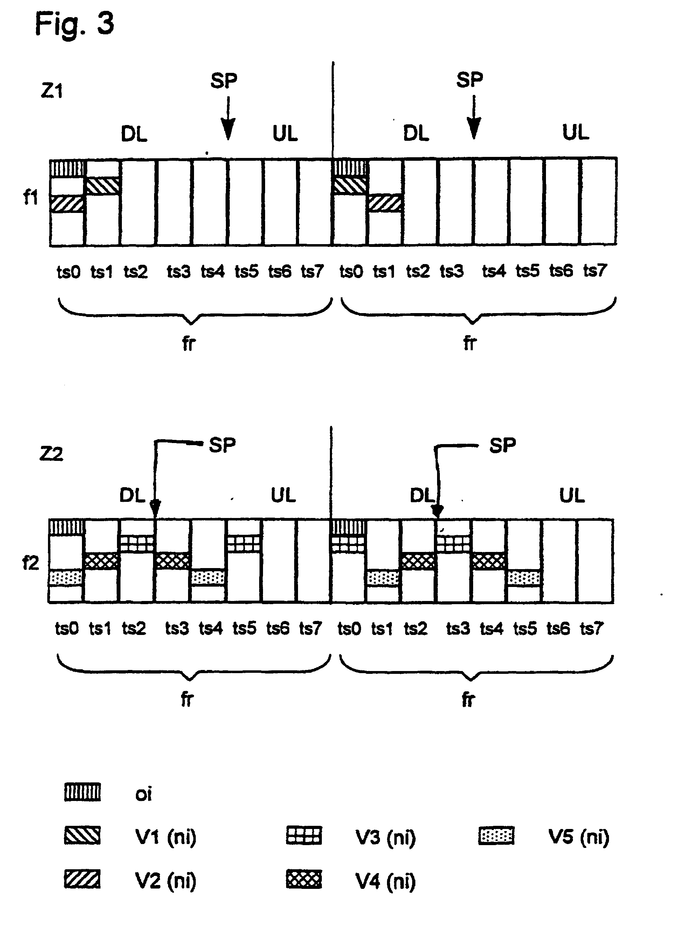

In FIG 3 ist ein Rahmen fr mit acht Zeitschlitzen ts0 bis ts7 gezeigt, wobei wie in FIG 2 fünf Zeitschlitze ts0 bis ts4 in Abwärtsrichtung DL und drei Zeitschlitze ts5 bis ts7 in Aufwärtsrichtung UL benutzt werden. Ein Umschaltzeitpunkt SP markiert die Übergang zwischen den Übertragungsrichtungen innerhalb des Rahmens fr. Es ist ebenfalls gezeigt, daß der Umschaltzeitpunkt SP innerhalb des Rahmens fr verschoben werden kann. Wird der Umschaltzeitpunkt SP zwischen den vierten und fünften Zeitschlitz ts3, ts4 gelegt, steht eine größere Übertragungskapazität in Aufwärtsrichtung UL zur Verfügung. Entsprechend des momentan Bedarfs an Übertragungskapazität können die funktechnischen Ressourcen optimal verteilt werden.

Für eine erste Funkzelle Z1 und einen Frequenzkanal mit einer ersten Trägerfrequenz f1 werden wiederkehrend im ersten Zeitschlitz ts0 Organisationsinformationen oi in Abwärtsrichtung DL übertragen. Im Sinne eines Organisationskanals (BCCH) enthalten die Organisationsinformationen Parameter zu den in der Funkzelle verwendeten Trägerfrequenzen, zur Funkzellenidentität etc. Weiterhin wird der erste Zeitschlitz ts0 für eine erste Verbindung V1 benutzt, in der Nutzinformationen ni dieser Verbindung V1 von der Basisstation BS zu einer Mobilstation MS übertragen werden. Der zweite Zeitschlitz ts1 wird von einer zweiten Verbindung V2 genutzt. Die Informationen weiterer Verbindungen in diesen Zeitschlitzen ts0, ts1 sind nicht gezeigt.

Für den darauffolgenden Rahmen fr ergibt sich bezüglich der ersten und zweiten Verbindung V1, V2 in Abwärtsrichtung DL folgendes Bild. Die zweite Verbindung V2 nutzt den ersten Zeitschlitz ts0 und die erste Verbindung V1 den zweiten Zeitschlitz tsl. Die Sequenz nach der die Übertragungszeitpunkte festgelegt werden, sieht also einen ständigen Wechsel zwischen den ersten beiden Zeitschlitzen ts0, ts1 für die diesen Zeitschlitzen zugewiesenen Verbindungen V1, V2 vor. Damit ist es für beide an den Verbindungen V1, V2 beteiligten Mobilstationen MS möglich, während der Hälfte der ersten Zeitschlitze ts0 eine Nachbarzellenmessung durchzuführen. Beispielsweise durch Überwachung des ersten Zeitschlitzes ts0 mit dem Organisationskanal (BCCH) einer zweiten Funkzelle Z2 mit einer anderen Trägerfrequenz f2 (es kann jedoch auch die gleiche Trägerfrequenz sein).

Handelt es sich bei den Verbindungen V1, V2 um Sprachverbindungen, so wird die Verschiebung nur in Abwärtsrichtung DL durchgeführt. Bei Datenverbindung existiert evtl. gar keine Übertragung in Aufwärtsrichtung UL. Alternative Möglichkeiten sehen vor, in umgekehrter Übertragungsrichtung die gleiche Sequenz zu benutzen oder eine andere Sequenz einzustellen (siehe Fig 3. unten). Die Sequenz wird auch unter dem Gesichtspunkt eingestellt, daß sich durch die rotierende Benutzung eines Zeitschlitzes ts eine Mittelung der Störer über mehrere Verbindungen ergibt. In Kombination mit einer Kodierung und einer Verwürfelung der Informationen einer Verbindung über mehrere Zeitschlitze ts wird somit die Wahrscheinlichkeit erhöht, daß die gesendeten Informationen erfolgreich empfangen werden.

Die zu benutzende Sequenz wird über die Organisationsinformationen oi signalisiert oder kann alternativ zwischen den beteiligten Funkstationen MS, BS mittels eines Signalisierungsaustausch individuell eingestellt werden.

FIG 3 zeigt auch einen Frequenzkanal einer benachbarten Funkzelle Z2, in dem ebenfalls die Organisationsinformation oi ständig im ersten Zeitschlitz ts0 übertragen wird. Nutzinformationen ni von z.B. drei gezeigten Verbindungen V3, V4, V5 verteilen sich auf die Zeitschlitze ts0 bis ts2 in Abwärtsrichtung DL und die Zeitschlitze ts3 bis ts5 in Aufwärtsrichtung UL. Die Verschiebungssequenz erfaßt dabei drei Zeitschlitze, so daß z.B. die Verbindung V3 nur für jeden dritten Rahmen fr den ersten Zeitschlitz ts0 in Abwärtsrichtung DL benutzt. In Aufwärtsrichtung UL erfolgt die Rotation in die entgegengesetzte Richtung.

Es gibt also ein große Anzahl von Möglichkeiten das erfindungsgemäße Verfahren zu implementieren, wobei die Mindestvoraussetzungen die folgenden sind:
- die Sequenz ist sowohl Basisstation als auch Mobilstation bekannt,
- die Sequenz umfaßt zumindest zwei Rahmen und zwei Zeitschlitze,
- bei TDD-Übertragungssystemen ist zwischen Ab- und Aufwärtsrichtung zu unterscheiden.

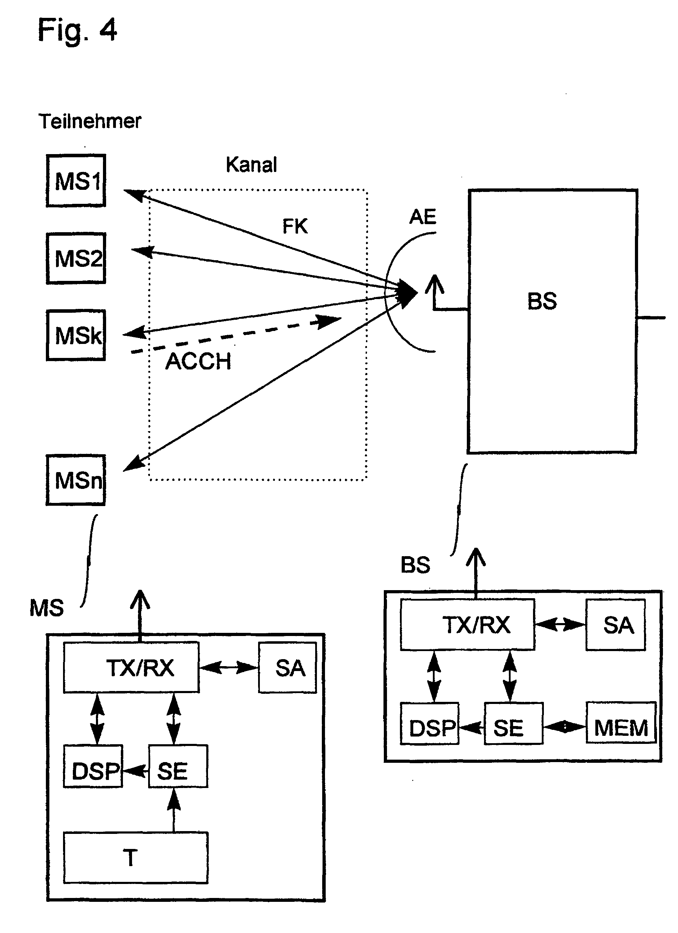

FIG 4 zeigt die Informationsübertragung von der Basisstation BS zu Mobilstationen MS1 bis MSn. Die Mobilstationen MS1 bis MSn bestimmen zuerst einen oder mehrere Frequenzbereiche mit einer ausreichend hohen oder maximalen Empfangsleistung. Dies sind die Frequenzbereiche der nächstliegenden Basisstation BS, in deren Zelle sich die Mobilstation MS momentan befindet. Somit entsteht die Zuordnung von Basisstation MS und Mobilstation MS.

Die Basisstation BS enthält eine Sende/Empfangseinrichtung TX/RX, die abzustrahlende Sendesignale digital/analog wandelt, vom Basisband in den Frequenzbereich der Abstahlung umsetzt und die Sendesignale moduliert und verstärkt. Eine Signalerzeugungseinrichtung SA hat zuvor die Sendesignale in Funkblöcken zusammengestellt und dem entsprechenden Frequenzkanal und Zeitschlitz zugeordnet. Eine Signalverarbeitungseinrichtung DSP wertet über die Sende/Empfangseinrichtung TX/RX empfangene Empfangssignale aus und führt eine Kanalschätzung durch.

Zur Signalverarbeitung werden die Empfangssignale in Symbole mit diskretem Wertevorrat umgewandelt, beispielsweise digitalisiert. Eine Signalverarbeitungseinrichtung DSP, die als digitaler Signalprozessor einen JD-Prozessor zum Detektieren der Nutzinformationen und der Signalisierungsinformationen nach dem JD-CDMA-Verfahren (joint detection) enthält, wertet die Datenteile d aus. Das Zusammenwirken der Komponenten, die Einstellung des Umschaltzeitpunkts SP und die Zuordnung der der Verbindungen zu einem Zeitschlitz wird durch eine Steuereinrichtung SE der Basisstation BS gesteuert. Zugehörige Daten über den Umschaltzeitpunkt SP und die konkreten Gegebenheiten der Verbindung werden in einer Speichereinrichtung MEM gespeichert.

Die Mobilstation MS enthält entsprechend adaptiert die für die Basisstation BS erläuterten Baugruppen und zusätzlich ein Bedienfeld T. Am Bedienfeld T kann der Teilnehmer Eingaben vornehmen, u.a. eine Eingabe zum Aktivieren der Mobilstation MS oder zum Verbindungsaufbau einer Verbindung zur Basisstation BS. Die Steuereinrichtung SE wertet in Abwärtsrichtung gesendete und von der Mobilstation MS empfangene Signale aus, bestimmt die Empfangsleistung bzw. das vorliegende momentane Signal/Stör-Verhältnis und veranlaßt eine Signalisierung zur Basisstation BS in einem Signalisierungskanal ACCH, worauf ein Frequenzkanal FK und ein Zeitschlitz ts für eine Nutzdatenübertragung zugewiesen wird.

Die Festlegung des Umschaltzeitpunkts SP zwischen Abwärtsrichtung DL und Aufwärtsrichtung UL erfolgt durch die Steuereinrichtung SE der Basisstation BS. Zum Einstellen des Sendezeitpunktes einer konkreten Verbindung, die durch die Sequenz beeinflußt wird, dienen die Steuereinrichtung SE der jeweils sendenden Station, d.h. der Mobilstation MS für die Aufwärtsrichtung UL und der Basisstation BS für die Abwärtsrichtung DL.

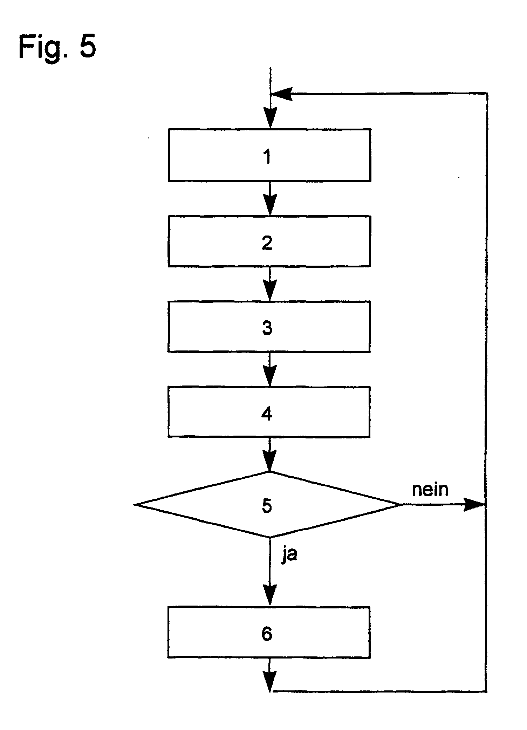

In FIG 5 ist der Ablauf der Informationsübertragung stark vereinfacht dargestellt. In einem ersten Schritt erfolgt bezugnehmend auf FIG 3 die Übertragung eines gemeinsamen Funkblocks für die Organisationsinformation oi und die Nutzinformationen ni der ersten Verbindung V1 im ersten Zeitschlitz ts0 durch die Basisstation BS in Abwärtsrichtung DL.

In einem zweiten Schritt wird durch die Basisstation BS die Nutzinformation ni der zweiten Verbindung im zweiten Zeitschlitz ts1 übertragen. Nach dem darauffolgenden Umschalten zum Umschaltzeitpunkt SP im dritten Schritt senden nunmehr die Mobilstation MS in Aufwärtsrichtung UL in dem bereits zuvor benutzten Frequenzkanal FK. In einem vierten Schritt werden durch die Mobilstationen MS in Aufwärtsrichtung nach Bedarf Informationen übertragen.

In einem fünften Schritt nach Ende des Rahmens fr wird die Sequenz abgefragt. Ist für den nächsten Rahmen eine Veränderung der Zuordnung der Verbindungen in Abwärtsrichtung zu den Zeitschlitzen vorgesehn, dann wird diese Zuordnung in einem sechsten Schritt sequenzgetreu vorgenommen.

## Patentansprüche

1. Verfahren zur Informationsübertragung zwischen einer Basisstation (BS) und weiteren Funkstationen (MS) in einem Funk-Kommunikationssystem,
bei dem
- die Informationen durch Funkblöcke entsprechend einem Zeitraster übertragen werden
- und für eine Verbindung (V1) der Abstand zwischen den übertragenen Funkblöcken einer Übertragungsrichtung (DL, UL) gemäß einer vorgebbaren Sequenz verändert wird,
**dadurch gekennzeichnet,**
**daß** in benachbarten Funkzellen (Z1, Z2) unterschiedliche Sequenzen verwendet werden.

2. Verfahren nach Anspruch 1, **dadurch gekennzeichnet, daß** die Informationsübertragung in Ab- und Aufwärtsrichtung (DL, UL) in einem gemeinsamen Frequenzkanal (FK) erfolgt und zwischen Abwärtsrichtung (DL) und Aufwärtsrichtung (UL) zumindest ein Umschaltzeitpunkt (SP) innerhalb eines Rahmens (fr) festgelegt wird.

3. Verfahren nach Anspruch 1 oder 2, **dadurch gekennzeichnet, daß** die Funkblöcke in Rahmen mit Zeitschlitzen (ts) einheitlicher Zeitdauer übertragen werden, die das Zeitraster bilden.

4. Verfahren nach Anspruch 3, **dadurch gekennzeichnet, daß** in jedem Rahmen einer der Zeitschlitze (ts0) für eine Übertragung von Organisationsinformationen (oi) vorgesehen ist, wobei in einem ersten Rahmen in diesem Zeitschlitz zusätzlich Nutzinformationen (ni) zumindest einer Verbindung (V1) übertragen werden.

5. Verfahren nach Anspruch 4, **dadurch gekennzeichnet, daß** sich der Abstand zwischen den übertragenen Funkblöcken für die Nutzinformationen (ni) ändert, die im ersten Rahmen im Zeitschlitz (ts0) für die Organisationsinformationen übertragen wurden.

6. Verfahren nach einem Ansprüche 1 bis 5, **dadurch gekennzeichnet, daß** eine weitere Funkstation (MS) innerhalb bestimmter Rahmen (fr) zusätzlich Funkblöcke mit Organisationsinformationen (oi) benachbarter Basisstationen (BS) empfängt.

7. Verfahren nach einem der Ansprüche 1 bis 6, **dadurch gekennzeichnet, daß** die vorgebbare Sequenz mittels Signalisierungsinformationen zwischen den beteiligten Stationen (BS, MS) eingestellt wird.

8. Verfahren nach Anspruch 2, **dadurch gekennzeichnet, daß** in Ab- und Aufwärtsrichtung (DL, UL) unterschiedliche Sequenzen verwendet werden.

9. Verfahren nach einem der Ansprüche 1 bis 8, **dadurch gekennzeichnet, daß** der Umschaltzeitpunkt (SP) innerhalb eines Rahmens (fr) mit mehreren Funkblöcken in beiden Übertragungsrichtungen (DL, UL) einstellbar ist.

10. Verfahren nach einem der Ansprüche 1 bis 9, **dadurch gekennzeichnet, daß** die Übertragung in breitbandigen Frequenzkanälen (FK) durchgeführt wird, wobei in einem Frequenzkanal (FK) gleichzeitig mehrere durch CDMA-Kodes unterscheidbare Signale übertragen werden.

11. Funk-Kommunikationssystem
mit einer Basisstation (BS) zur Informationsübertragung zu zumindest einer weiteren Funkstation (MS),
mit einer Steuereinrichtung (SE) zum Zusammenstellen von Funkblöcken, durch die die Informationen entsprechend einem Zeitraster übertragen werden,
dessen Steuereinrichtung (SE) derartig ausgebildet ist, daß für eine Verbindung (V1) in wenigstens zwei benachbarten Funkzellen (Z1; Z2) der Abstand zwischen den übertragenen Funkblöcken einer Übertragungsrichtung (DL, UL) gemäß einer vorgebbaren Sequenz verändert wird,
**dadurch gekennzeichnet,**
**daß** die Sequenzen für die beiden Funkzellen (Z1; Z2) unterschiedlich sind.

## Claims

1. Method for transmitting information between a base station (BS) and further radio stations (MS) in a radio communication system, in which
- the information is transmitted by radio blocks in accordance with a time frame,
- and for a connection (V1) the distance between the transmitted radio blocks in one direction of transmission (DL, UL) is altered on the basis of a prescribable sequence,
**characterized**
**in that** different sequences are used in adjacent radio cells (Z1, Z2).

2. Method according to Claim 1, **characterized in that** information is transmitted in the downlink and the uplink (DL, UL) in a common frequency channel (FK), and at least one changeover time (SP) within a frame (fr) is stipulated between the downlink (DL) and the uplink (UL).

3. Method according to Claim 1 or 2, **characterized in that** the radio blocks are transmitted in frames with timeslots (ts) of standard duration which form the time frame.

4. Method according to Claim 3, **characterized in that** one of the timeslots (ts0) in each frame is provided for transmitting organization information (oi), with user information (ni) for at least one connection (V1) additionally being transmitted in this timeslot in a first frame.

5. Method according to Claim 4, **characterized in that** the distance between the transmitted radio blocks changes for the user information (ni) which has been transmitted in the timeslot (ts0) for the organization information in the first frame.

6. Method according to one of Claims 1 to 5, **characterized in that** a further radio station (MS) additionally receives radio blocks containing organization information (oi) for adjacent base stations (BS) within particular frames (fr).

7. Method according to one of Claims 1 to 6, **characterized in that** the prescribable sequence is set between the stations (BS, MS) involved by means of signalling information.

8. Method according to Claim 2, **characterized in that** different sequences are used in the downlink and the uplink (DL, UL).

9. Method according to one of Claims 1 to 8, **characterized in that** the changeover time (SP) within a frame (fr) having a plurality of radio blocks can be set in both directions of transmission (DL, UL).

10. Method according to one of Claims 1 to 9, **characterized in that** transmission is effected in broadband frequency channels (FK), with one frequency channel (FK) being used for simultaneously transmitting a plurality of signals which can be distinguished by CDMA codes.

11. Radio communication system
having a base station (BS) for transmitting information to at least one further radio station (MS),
having a control device (SE) for compiling radio blocks which transmit the information in accordance with a time frame,
whose control device (SE) is in a form such that for a connection (V1) in at least two adjacent radio cells (Z1; Z2), the distance between the transmitted radio blocks in one direction of transmission (DL, UL) is altered on the basis of a prescribable sequence,
**characterized**
**in that** the sequences are different for the two radio cells (Z1; Z2).

## Revendications

1. Procédé pour la transmission d'informations entre une station de base (BS) et d'autres stations radio (MS) dans un système de radiocommunication, dans lequel
- les informations sont transmises par blocs radio selon une trame temporelle
- et, pour une liaison (V1), la distance entre les blocs radio transmis d'une direction de transmission (DL, UL) est modifiée selon une séquence pouvant être prescrite,
**caractérisé en ce que** des séquences différentes sont utilisées dans des cellules radio (Z1, Z2) voisines.

2. Procédé selon la revendication 1, **caractérisé en ce que** la transmission d'informations dans la direction descendante et dans la direction montante (DL, UL) s'effectue dans un canal fréquentiel commun (FK) et au moins un instant de commutation (SP) à l'intérieur d'une trame (fr) est fixé entre la direction descendante (DL) et la direction montante (UL).

3. Procédé selon la revendication 1 ou 2, **caractérisé en ce que** les blocs radio sont transmis dans des trames avec des créneaux temporels (ts) de durée uniforme qui forment la trame temporelle.

4. Procédé selon la revendication 3, **caractérisé en ce que**, dans chaque trame, l'un des créneaux temporels (ts0) est prévu pour une transmission d'informations d'organisation (oi), des informations utiles (ni) d'au moins une liaison (V1) étant transmises en plus dans une première trame dans ce créneau temporel.

5. Procédé selon la revendication 4, **caractérisé en ce que** la distance entre les blocs radio transmis varie pour les informations utiles (ni) qui ont été transmises dans la première trame dans le créneau temporel (ts0) destiné aux informations d'organisation.

6. Procédé selon l'une des revendications 1 à 5, **caractérisé en ce qu'**une autre station radio (MS) reçoit à l'intérieur de certaines trames (fr), en plus, des blocs radio avec des informations d'organisation (oi) de stations de base voisines (BS).

7. Procédé selon l'une des revendications 1 à 6, **caractérisé en ce que** la séquence pouvant être prescrite est réglée au moyen d'informations de signalisation entre les stations participantes (BS, MS).

8. Procédé selon la revendication 2, **caractérisé en ce que** des séquences différentes sont utilisées dans la direction descendante et dans la direction montante (DL, UL).

9. Procédé selon l'une des revendications 1 à 8, **caractérisé en ce que** l'instant de commutation (SP) à l'intérieur d'une trame (fr) avec plusieurs blocs radio est réglable dans les deux directions de transmission (DL, UL).

10. Procédé selon l'une des revendications 1 à 9, **caractérisé en ce que** la transmission est effectuée dans des canaux fréquentiels (FK) à large bande, plusieurs signaux qui peuvent être distingués par des codes CDMA étant alors transmis simultanément dans un canal fréquentiel (FK).

11. Système de radiocommunication,
avec une station de base (BS) pour la transmission d'informations à au moins une autre station radio (MS),
avec un dispositif de commande (SE) pour la composition de blocs radio à travers lesquels les informations sont transmises selon une trame temporelle,
dont le dispositif de commande (SE) est conçu de telle sorte que, pour une liaison (V1) dans au moins deux cellules radio (Z1; Z2) voisines, la distance entre les blocs radio transmis d'une direction de transmission (DL, UL) est modifiée selon une séquence pouvant être prescrite,
**caractérisé en ce que** les séquences pour les deux cellules radio (Z1; Z2) sont différentes.
